# DEMANDE DE BREVET EUROPEEN

(11) **EP 0 713 125 A1**
(43) Date de publication de la demande: **22.05.1996**
(21) Numéro de dépôt: 95117752.6
(22) Date de dépôt: 10.11.1995
(51) Int. Cl.: G02F 1/1345

(54) **Cellule électrique**

(30) Priorité: 18.11.1994 FR 9413850
(71) Demandeur: ASULAB S.A., CH-2501 Bienne (CH)
(72) Inventeur: Grupp, Joachim, CH-2003 Neuchâtel (CH); Lemarié, Bernard, F-07500 Guilherand-Granges-les Valences (FR)
(74) Mandataire: Patry, Didier Marcel Pierre

(57) **Abrégé**

Pour éviter tout risque de décollement à l'endroit des passages de courant prévus à travers le cadre de scellement (7) qui, avec les lames-supports (1,2) définit une chambre (11) fermée de façon étanche au centre de la cellule, les électrodes (3A,4) situées à l'intérieur de cette chambre sont reliées à des contacts électriques respectifs (6) par l'intermédiaire de lignes de colle conductrice (9) s'étendant de l'intérieur à l'extérieur de la chambre. Ces lignes de colle peuvent également servir à relier deux électrodes entre elles.

## Description

La présente invention est relative à une cellule électrique du type comprenant deux lames-supports parallèles, en matière plastique, écartées l'une de l'autre, portant des électrodes sur leurs faces en regard, ces lames-supports enfermant entre elles une couche de matière sensible qui peut changer de propriétés physiques, notamment optiques, sous l'effet d'une tension appliquée aux électrodes, ou changer de propriétés électriques sous l'effet d'une contrainte appliquée aux lames-supports ou d'un rayonnement traversant l'une de celles-ci, ladite matière sensible étant protégée du contact avec l'atmosphère par un cadre de scellement reliant entre elles, de façon étanche, les parties périphériques des lames-supports, ce cadre de scellement comportant des passages électriques pour relier électriquement les électrodes à l'extérieur.

De telles cellules électriques sont utilisées notamment pour des afficheurs à cristaux liquides et pour des cellules de production d'énergie à partir du rayonnement solaire.

Dans le cas d'une cellule d'affichage à cristaux liquides, au moins une des lames-supports est constituée d'une matière transparente, et au moins une des électrodes est également constituée d'une substance transparente par exemple un oxyde d'étain Sn0₂, ou un oxyde mixte d'indium et d'étain connu sous la désignation "ITO".

La fixation des électrodes sur les lames-supports en matière plastique est réalisée de la façon suivante : on traite d'abord sélectivement le support par effet corona ou similaire, pour préparer sa surface aux opérations suivantes, puis on place ou crée sur la surface ainsi préparée une sous-couche d'accrochage, par exemple de Si0₂ ou Al₂0₃, et on dépose la substance de l'électrode, notamment de l'électrode transparente, sur cette sous-couche. Ces opérations se font à basse température, pour ne pas altérer les matières utilisées, ce qui entraîne une adhérence médiocre.

Selon la technique usuelle, les électrodes de la cellule se prolongent jusqu'au bord d'une des lames-supports, pour constituer des contacts de connexion avec l'extérieur, alors que le cadre de scellement, constitué d'une colle polymérisable, s'étend un peu en retrait par rapport au bord de la lame-support, de façon à dégager les contacts de connexion, et est donc traversé par le prolongement de l'électrode.

On a constaté, lors d'essais comportant un cyclage thermique, qu'il apparaissait fréquemment un décollement du substrat dans la zone voisine du passage du prolongement de l'électrode à travers le cadre de scellement. Ce décollement conduit à une dégradation irrémédiable de la cellule.

La présente invention a pour but de remédier à cet inconvénient, et de fournir une cellule électrique du type indiqué au début, et dans lequel le risque de dégradation, sous l'effet de cycles thermiques soit considérablement réduit ou supprimé.

Pour obtenir ce résultat, l'invention prévoit que les électrodes situées à l'intérieur du cadre de scellement ne traversent pas celui-ci, mais sont reliées électriquement à des contacts situés à l'extérieur de ce cadre par l'intermédiaire de lignes d'adhésif électriquement conducteur fixées à la fois à une lame-support et au cadre de scellement.

L'invention résulte d'une hypothèse émise par les inventeurs, que les décollements observés résulteraient de tensions importantes apparaissant aux interfaces entre le substrat et l'électrode et entre l'électrode et le cadre de scellement, et résultant des différences de coefficient de dilatation thermique entre les matières anorganiques et organiques en présence dans ces interfaces.

Les résultats obtenus grâce à l'invention confirment la validité de l'hypothèse.

Avantageusement, l'adhésif électriquement conducteur est constitué d'une colle polymérisable chargée d'une quantité convenable de particules métalliques. De préférence, les particules métalliques sont des particules d'argent.

Suivant une réalisation intéressante, une ligne d'adhésif conducteur est assez épaisse pour s'étendre d'une lame-support à l'autre, le cadre de scellement proprement dit étant interrompu à l'endroit de cette ligne, et ses parties adjacentes étant liées de façon étanche à ladite ligne. Dans ce cas, la confection du passage électrique exige relativement peu de précaution, et, au cas où les deux électrodes doivent être connectées ensemble, le même passage électrique permet de réaliser en même temps la connexion.

Si les électrodes ne doivent pas être connectées ensemble, on pourra préférer prévoir qu'une ligne d'adhésif conducteur a une épaisseur insuffisante pour s'étendre d'une lame-support à l'autre, et que le cadre de scellement proprement dit n'est pas interrompu à l'endroit de ladite ligne.

L'invention va maintenant être expliquée de façon plus détaillée à l'aide d'un exemple pratique illustré avec les dessins, parmi lesquels :
Figure 1 est une vue en plan et en coupe partiellement arrachée d'une cellule électrique conforme à l'invention.
Figure 2 est une vue en coupe selon la ligne II-II de la figure 1.
Figure 3 est une vue en coupe suivant la ligne III-III de la figure 1.

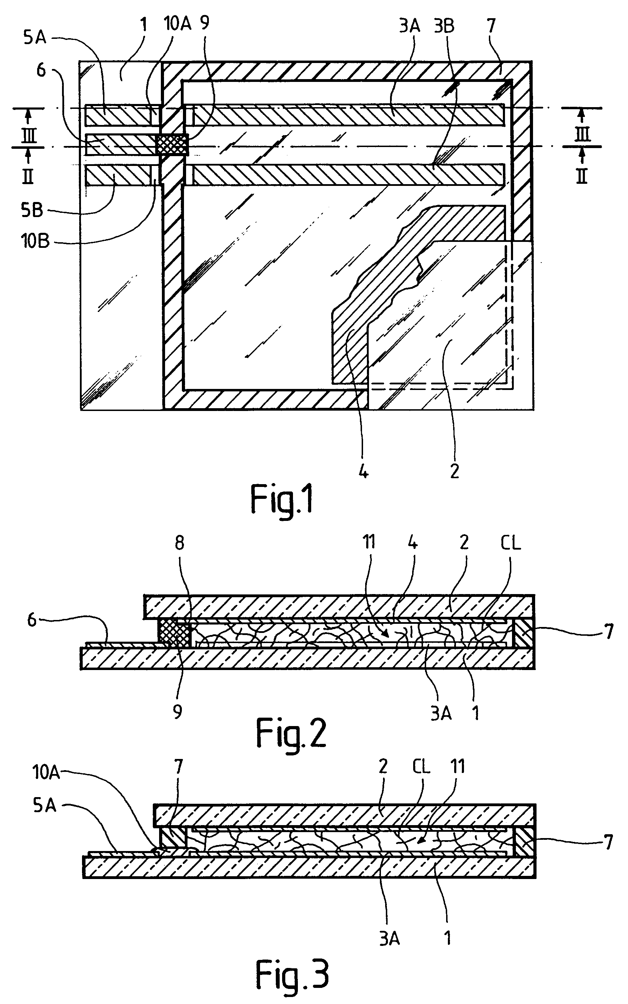

Les figures 1 à 3 montrent une cellule d'affichage par cristaux liquides composée d'une lame-support inférieure 1 et d'une lame-support supérieure 2, toutes deux en matière plastique transparente, la lame-support supérieure étant partiellement arrachée à la figure 1. La lame-support 1 porte une pluralité d'électrodes inférieures 3A, 3B, etc., selon une configuration prédéterminée, en l'occurrence en lignes. Ces électrodes sont réalisées en matière conductrice transparente du type "ITO" (oxyde d'indium et d'étain). La lame-support 2 porte, à sa face inférieure, par exemple une électrode unique 4 du même type que les électrodes 3 et recouvrant à peu près la totalité de la surface de la face inférieure de la lame-support supérieure 2. On a supposé, pour simplifier, que les électrodes 3A, 3B, etc., et 4 étaient reliées respectivement à des contacts extérieurs 5A, 5B, etc., et 6. D'autres contacts, nécessaires pour le fonctionnement de la cellule, n'ont pas été représentés. On a représenté, seulement à la figure 1, les contacts 5A et 5B reliés respectivement aux électrodes inférieures 3A et 3B, et un contact 6, qui est relié à l'électrode supérieure 4 et isolé des électrodes inférieures 3A, 3B, etc., auxquelles cette électrode supérieure 4 est superposée, voir figure 2. Bien entendu, d'autres configurations d'électrodes sont possibles.

Un cadre de scellement 7, formé à l'aide d'une colle polymérisable, dessine un contour sensiblement fermé le long du bord de la lame-support supérieure 2. La lame-support inférieure s'étend un peu au-delà, et porte les contacts 5A, 5B, etc. et 6. Le cadre de scellement 7 est lié de façon étanche aux lames-supports 1 et 2.

La figure 2 est une coupe par un plan qui ne traverse aucune des électrodes inférieures 3A, 3B, etc. On voit que les électrodes inférieures et supérieure 3A, 3B, etc., et 4 ne s'étendent pas jusqu'au bord des lames-supports correspondantes 1 et 2, mais que l'électrode supérieure 4 comprend à sa périphérie une languette de contact 8 qui s'étend plus loin, en direction de l'extérieur, que les électrodes inférieures 3A, 3B, etc.. Une masse de matière adhésive conductrice 9, constituée dans la pratique par écrasement, entre les lames-supports 1 et 2, d'une goutte de colle par exemple d'une colle vendue sous la désignation commerciale "EPOTEC H 20 F", constituée d'une colle organique chargée à environ 80% en poids d'argent, vient en contact d'une part avec l'électrode supérieure 4, et d'autre part avec le contact 6, mais n'atteint pas les électrodes inférieures 3A, 3B (figure 1). On notera à ce propos que pour garantir un bon contact de la languette 8 respectivement du contact 6 avec la matière adhésive 9, on veillera à ce que la matière adhésive 9 rencouvre sensiblement la languette 8 ainsi que le contact 6.

En d'autres termes, le cadre de scellement comprend deux matières, respectivement électriquement isolante et conductrice, la partie du cadre de scellement en matière électriquement conductrice s'étendant de l'extérieur vers l'intérieur du cadre de scellement, les électrodes n'étant en contact qu'avec la partie du cadre de scellement réalisée en matière électriquement conductrice.

La figure 3 est une coupe par un plan qui traverse une électrode inférieure 3A. Dans ce plan, l'électrode supérieure 4 s'étend moins loin vers l'extérieur que l'électrode inférieure 3A. Celle-ci atteint une masse conductrice 10A analogue à la masse 9 mentionnée plus haut, et est ainsi connectée avec le contact extérieur 5A, alors que l'électrode supérieure 4 est isolée.

On notera qu'à la figure 2, on a représenté la masse 9 en contact étanche avec la languette 8 d'un côté, et avec la lame support inférieure 1 de l'autre. Le cadre de scellement 7 est donc interrompu à l'endroit de la masse 9. A la figure 3, on a montré que le cadre de scellement 7 est seulement aminci à l'endroit de la masse 10A, qui est en contact étanche avec la partie amincie du cadre 7 et avec la lame-support 1.

D'autres dispositions sont possibles, pourvu que les masses 9, 10A, 10B coopèrent avec le cadre 7 pour compléter l'isolation de la chambre intérieure 11 définie entre les lames-supports 1 et 2. Cette chambre intérieure est remplie d'une matière à cristaux liquides CL. Elle pourrait aussi bien contenir, par exemple, une matière photo-électrique.

## Revendications

1. Cellule électrique du type comprenant deux lames-supports parallèles (1,2), en matière plastique, écartées l'une de l'autre, portant des électrodes (3A,3B,4) sur leurs faces en regard, ces lames-supports enfermant entre elles une couche de matière sensible (CL) qui peut changer de propriétés physiques, notamment optiques, sous l'effet d'une tension appliquée aux électrodes, ou changer de propriétés électriques sous l'effet d'une contrainte appliquée aux lames-supports ou d'un rayonnement traversant l'une de celles-ci, ladite matière sensible étant protégée du contact avec l'atmosphère par un cadre de scellement (7) reliant entre elles, de façon étanche, les parties périphériques des lames-supports, ce cadre de scellement comportant des passages électriques pour relier électriquement les électrodes à l'extérieur,
caractérisée en ce que les électrodes situées à l'intérieur du cadre de scellement ne traversent pas celui-ci, mais sont reliées électriquement à des contacts (5A,5B,6) situés à l'extérieur de ce cadre par l'intermédiaire de lignes d'adhésif électriquement conducteur (9,10A,10B) fixées à la fois à au moins une lame-support (1,2) et au cadre de scellement (7).

2. Cellule selon la revendication 1, caractérisée en ce que l'adhésif électriquement conducteur est constitué d'une colle polymérisable chargée d'une quantité convenable de particules métalliques.

3. Cellule selon la revendication 2, caractérisée en ce que les particules métalliques sont des particules d'argent.

4. Cellule selon l'une des revendications 1 à 3, caractérisée en ce qu'une ligne d'adhésif conducteur (9) est assez épaisse pour s'étendre d'une lame-support (1,2) à l'autre, le cadre de scellement (7) proprement dit étant interrompu à l'endroit de cette ligne, et ses parties adjacentes étant liées de façon étanche à ladite ligne.

5. Cellule selon l'une des revendications 1 à 3, caractérisée en ce qu'une ligne d'adhésif conducteur (10A,10B) a une épaisseur insuffisante pour s'étendre d'une lame-support (1,2) à l'autre, et le cadre de scellement proprement (7) dit n'est pas interrompu à l'endroit de ladite ligne.
